# EUROPÄISCHE PATENTSCHRIFT

(11) **EP 2 794 492 B1**
(45) Veröffentlichungstag und Bekanntmachung des Hinweises auf die Patenterteilung: **17.08.2016**
(21) Anmeldenummer: 12813276.8
(22) Anmeldetag: 18.12.2012
(51) Int. Cl.: C02F 1/36, C02F 1/78, C02F 1/66, C02F 103/18, C02F 103/36, C02F 103/28, C02F 101/10

(54) **VERFAHREN ZUR BEHANDLUNG SULFIDHALTIGER ABLAUGE**
METHOD FOR TREATMENT OF SULPHIDE-CONTAINING SPENT CAUSTIC
PROCÉDÉ POUR TRAITER UNE LIQUEUR RÉSIDUAIRE CONTENANT DES SULFURES

(30) Priorität: 21.12.2011 DE 102011121910
(43) Veröffentlichungstag der Anmeldung: 29.10.2014
(73) Patentinhaber: Ultrasonic Systems GmbH, 10707 Berlin (DE)
(72) Erfinder: POESCHL, Ulrich, 86647 Buttenwiesen (DE); OLIVERI, Carmelo, 89079 Ulm (DE)
(74) Vertreter: Stütz, Jan
(86) Internationale Anmeldenummer: PCT/EP2012/005253
(87) Internationale Veröffentlichungsnummer: WO 2013/091845

(56) Entgegenhaltungen:
- WO-A1-2008/080618
- CN-Y- 2 517 734
- CN-Y- 201 330 188
- DE-A1-102005 028 660
- JP-A- 2009 131 827
- US-A- 5 130 032
- US-A1- 2003 132 165
- US-B1- 6 348 129

## Beschreibung

Die Erfindung betrifft ein Verfahren zur Behandlung einer Sulfide enthaltenden Ablauge durch chemische Umsetzung der Sulfide, insbesondere durch Oxidation.

Sulfide enthaltende alkalische Abwässer und Prozesswässer, im Folgenden auch als "Ablaugen" bezeichnet, entstehen bei einer Vielzahl von industriellen Verfahren. Alkalische Ablaugen werden üblicherweise zum Auswaschen saurer Bestandteile aus verschiedenen Gasströmen oder zur Extraktion aus Ablaugesströmen verwendet. Die Gasströme werden in der petrochemischen Industrie, Petroleumraffination, Zellstoff- und Papierherstellung und verschiedenen chemischen Herstellungsverfahren erzeugt. Die sauren Bestandteile schließen Schwefelwasserstoff, H₂S, Mercaptane, RSH und möglicherweise Kohlendioxid und andere organische Säuren ein. Außerdem können die sulfidhaltigen Ablaugen auch weitere organische Substanzen enthalten die sich zum chemischen Sauerstoffbedarf (COD) der Lauge addieren. Die organischen Substanzen umfassen insbesondere Phenole, organische Säuren und Öle.

Die verunreinigten sulfidhaltigen Ablaugen stellen sowohl aufgrund ihres Alkaligehalts als auch aufgrund der darin enthaltenen sauren Bestandteile, insbesondere der Sulfide, ein beachtliches Entsorgungsproblem dar. Die Neutralisierung der sulfidhaltigen Ablaugen durch Säurezusatz führt zu einer Freisetzung von toxischem Schwefelwasserstoff. Es ist deshalb erforderlich, die in den Ablaugen enthaltenen sauren Bestandteile in eine zur Freisetzung in die Umwelt geeignete Form umzuwandeln.

Zur Aufbereitung von sulfidhaltigen Ablaugen sind verschiedene Verfahren bekannt. Die DE 196 12 945 A1 beschreibt die chemische Umsetzung der Sulfide mit Schwefeldioxid unter Bildung von Thiosulfat bei einem pH-Wert von etwa 6. Sowohl Schwefeldioxid als auch Thiosulfat sind jedoch toxikologisch nicht unbedenklich. Außerdem führt die erforderliche Ansäuerung der Ablauge zu einem erheblichen Anfall von Salzen, die ebenfalls entsorgt werden müssen.
Ein Verfahren zur Behandlung sulfidhaltiger Ablaugen durch Nassoxidation ist aus der US-A 4,350,599 bekannt. Bei diesem Verfahren werden die sauren Bestandteile der Ablauge durch Oxidation mit Luftsauerstoff bei erhöhter Temperatur und unter erhöhtem Druck in anorganisches Sulfat, Kohlendioxid und Wasser überführt. Die Oxidation erfolgt innerhalb eines geschlossenen Systems, so dass ein Übertritt der Schadstoffe in die Atmosphäre weitgehend verhindert wird. Die hohe Alkalinität der sulfidhaltigen Ablaugen erfordert allerdings spezielle Konstruktionsmaterialien wie beispielsweise korrosionsfeste Nickelstähle, die den bei der Durchführung der Nassoxidation herrschenden Druck- und Temperaturbedingungen standhalten können. Daher sind diese Verfahren sehr teuer.
US 6 348 129 B1 offenbart die Behandlung eines wässrigen Abfallstrom von pH 8 bis 12, der aus einer Papierfabrik stammt und Sulfide ("TRS" genannt) enthält. Die Behandlung erfolgt hierbei mittels einer Oxidation durch Ozon in einem Reaktor. Die hier beschriebene Vermischung des Ozons in der Flüssigkeit ist allerdings sehr ineffizient.
Aus der WO 2008/080618 A1 ist eine Vorrichtung zur Behandlung einer Ablauge bekannt mit einem in einem Raum angeordneten mechanischen Kavitationselement und einer Gaszufuhreinrichtung, die sich durch das Kavitationselement erstreckt. Die Vorrichtung umfasst ferner einen akustischen Leistungswandler, der Schallwellen direkt in den Raum abstrahlt. Die Bewegungen des Kavitationselements sorgen für eine Vermischung des zugeführten Gases mit der zu behandelnden Ablauge. Als zweite Maßnahme werden Schallwellen mit Hilfe des akustischen Leistungswandlers unmittelbar in die Ablauge eingeleitet, wodurch die mittlere Blasengröße in der gesamten Ablauge reduziert wird. Der Leistungswandler ist insbesondere als Ultraschallgeber ausgebildet, der Frequenzen in einem Bereich zwischen 400 und 1500 kHz, vorzugsweise zwischen 600 und 1200 kHz liefert. Es wird vorgeschlagen, die Vorrichtung zur Entkeimung von Abwässer durch Behandlung mit Ozon einzusetzen.
Der Erfindung liegt die Aufgabe zugrunde, ein kostengünstiges Verfahren zur Aufbereitung sulfidhaltiger Ablaugen bereitzustellen, mit dem einige Nachteile der im Stand der Technik bekannten Verfahren vermieden werden können.
Zur Lösung dieser Aufgabe wird erfindungsgemäß ein Verfahren zur Behandlung einer Sulfide enthaltenden Ablauge durch chemische Umsetzung der Sulfide bereitgestellt, wobei das Verfahren folgende Schritte umfasst:
Einleiten der Ablauge in einen Reaktionsraum, der wenigstens einen akustischen Leistungswandler und ein Kavitationselement umfasst;
Behandlung der Ablauge mit Ultraschall aus dem wenigstens einen akustischen Leistungswandler,
Zuführen eines ozonhaltigen Gasgemischs in den Reaktionsraum und Verteilen des ozonhaltigen Gasgemischs in der Ablauge unter Verwendung des Kavitationselements;
wobei die sulfidhaltige Ablauge mit dem ozonhaltigen Gasgemisch unter Bildung von nicht-sulfidischen anorganischen Schwefelverbindungen umgesetzt wird.
Erfindungsgemäß wird bei dem Verfahrens die Temperatur der Sulfide enthaltenden Ablauge gemessen und zur Steuerung der zur Ablauge zuzuführenden Ozonmenge ausgewertet.
Das erfindungsgemäße Verfahren zeichnet sich dadurch aus, dass die Behandlung der Sulfide enthaltenden Ablauge bei Umgebungsbedingungen durchgeführt werden kann. Daher sind die Anforderungen an die Korrosionsbeständigkeit der zur Durchführung des Verfahrens verwendeten Vorrichtung und der angeschlossenen Rohrleitungen geringer. Außerdem müssen keine druck- oder temperaturbeständigen Apparaturen bereitgestellt werden. Da die Umsetzung der sulfidhaltigen Ablauge durch Oxidation mit Ozon exotherm verläuft, kann das Verfahren durch Kontrolle der Laugentemperatur gesteuert werden. Dies ermöglicht eine einfache Verfahrensführung.
Die Ablauge weist vorzugsweise einen pH-Wert von etwa 8 bis 14, besonders bevorzugt einen pH-Wert von 9 bis 12 auf. Bei diesen pH-Werten liegt der gesamte Schwefelwasserstoffanteil in Form von Sulfidionen vor, sodass keine Gefahr einer Freisetzung von toxischem Schwefelwasserstoff in die Umwelt besteht.
Die Ultraschallbehandlung wird vorzugsweise in einem Frequenzbereich von 400 bis 1500 kHz, vorzugsweise von 600 bis 1200 kHz durchgeführt. Unterhalb von 400 kHz ist keine nennenswerte Beschleunigung der Oxidationsreaktion zwischen Sulfid und Ozon zu erwarten. Ultraschallgeber mit einem Frequenzband von über 1500 kHz zeigen keine Leistungsverbesserung.

Gemäß einer besonderen Ausführungsform wird die sulfidhaltige Ablauge bereits vor dem Zuführen des ozonhaltigen Gasgemischs in den Reaktionsraum mit Ultraschall behandelt. Ohne an eine Theorie gebunden sein zu wollen, wird angenommen, dass durch die Ultraschallbehandlung eine energetische Aufladung der sulfidhaltigen Ablauge unter Bildung von OH-Radikalen erfolgt, welche die nachfolgende Umsetzung der Sulfide mit Ozon begünstigen.

Die Ultraschallbehandlung während und/oder nach der Einleitung des ozonhaltigen Gasgemischs in die Ablauge bewirkt eine Zerkleinerung der durch das Kavitationselement in die Ablauge eingetragenen Gasblasen und kann bis zu einer molekular-dispersen Lösung des Gasgemischs führen.

Besonders bevorzugt wird die Ultraschallbehandlung sowohl vor als auch während und/oder nach der Zuführung des ozonhaltigen Gasgemischs in den Reaktionsraum durchgeführt, wodurch eine noch bessere Verteilung bzw. molekular-disperse Lösung des Gasgemischs in der sulfidhaltigen Ablauge erfolgt. Aufgrund des hohen Anteils an gelöstem Gas in der sulfidhaltigen Ablauge wird angenommen, dass nicht nur das im Gasgemisch enthaltene Ozon, sondern auch der gelöste Sauerstoff zu einer Oxidation der Sulfide sowie wahlweise der weiteren organischen Substanzen unter Bildung von nicht-sulfidischen anorganischen Schwefelverbindungen, insbesondere Sulfat, und Kohlendioxid beiträgt.

Die Umsetzung der Sulfide mit Ozon erfolgt vorzugsweise bei etwa 20 bis 40 °C. Das Verfahren kann somit im Wesentlichen bei Raumtemperatur durchgeführt werden. Die exotherme Umsetzung der Sulfide mit Ozon bzw. Sauerstoff führt zu einem Temperaturanstieg in der sulfidhaltigen Ablauge, der zur Reaktionskontrolle verwendet werden kann.

Gemäß einer besonders bevorzugten Ausführungsform des erfindungsgemäßen Verfahrens sind daher Temperatursensoren am Reaktionsraum und/oder in den Zu- oder Ableitungen vorgesehen, wobei die gemessenen Temperaturwerte in einer Steuervorrichtung ausgewertet werden. Mit dieser Auswertung kann dann die in den Reaktionsraum zuzuführende Ozonmenge berechnet werden.

Das Verfahren wird bevorzugt so durchgeführt, dass die gesamte, dem Reaktionsraum zugeführte Ozonmenge verbraucht wird. Eine Nachbehandlung der aus der Vorrichtung ausgetragenen Gase kann damit entfallen.

Aus Sicherheitsgründen ist allerdings vorgesehen, dass die aus der Vorrichtung ausgetragenen Gase über einen Katalysator zur Zersetzung von Restozon und/oder einen Katalysator zur weiteren Oxidation von schwefelhaltigen Verbindungen, insbesondere Schwefelwasserstoff und/oder Schwefeldioxid, geleitet werden.

Gemäß einer weiteren Ausführungsform der Erfindung ist vorgesehen, dass mehrere aufeinanderfolgende Reaktionsräume vorgesehen sind, in denen jeweils die Ultraschallbehandlung sowie die Umsetzung der Ablauge mit Ozon durchgeführt werden. Damit kann die Zeit zur Entfernung der Sulfide aus der Ablauge bis zu einem festgelegten Konzentrationswert erheblich verkürzt werden.

Besonders bevorzugt wird das erfindungsgemäße Verfahren unter Umgebungsdruck durchgeführt. Der Reaktionsraum und die weiteren Rohrleitungen der Vorrichtung müssen damit nicht druckbeständig ausgebildet sein.

Das erfindungsgemäße Verfahren gestattet außerdem einen modularen Aufbau der Vorrichtung, sodass nach Belieben bereits vorgefertigte Reaktionsräume aneinander angeschlossen und mit dem Vorratstank verbunden werden können, der die sulfidhaltige Ablauge enthält. Das Verfahren ist somit in mobilen Stationen vor Ort durchführbar. Ein Transport der sulfidhaltigen Ablauge kann damit entfallen.

Der grundlegende Aufbau des Reaktionsraums mit dem mechanischen Kavitationselement und einer Vorrichtung zur Zuführung von ozonhaltigem Gas ist grundsätzlich aus der WO 2008/080618 A1 bekannt, auf die hiermit Bezug genommen wird.

Das mechanische Kavitationselement ist bevorzugt ein rotierender Strömungskörper, der so geformt ist, dass er entlang seiner Oberfläche Zonen mit möglichst hoher Strömungsgeschwindigkeit erzeugt, um eine möglichst hohe Kavitationswirkung und damit eine gute Vermischung des Gasgemischs mit der Ablauge zu erzielen.

Das mechanische Kavitationselement ist beispielsweise scheibenförmig oder diskusförmig ausgebildet. Dabei kann eine Scheibe verwendet werden, die mit speziellen Strukturen wie etwa ellipsoidförmigen Taschen versehen ist, in deren Bereich sich sehr hohe Strömungsgeschwindigkeiten ausbilden.

Das Zuführen des ozonhaltigen Gasgemischs erfolgt vorzugsweise mittels einer Gaszuführleitung unmittelbar an der Oberfläche des Kavitationselements. Dadurch kann das Gasgemisch praktisch vollständig in die Ablauge eingetragen werden. Besonders bevorzugt wird das ozonhaltige Gasgemisch im Bereich der höchsten Strömungsgeschwindigkeit an der Oberfläche des Kavitationselements zugeführt, da sich so eine besonders gute Durchmischung erzielen lässt. Dies kann im Bereich der genannten Strukturen oder auch im Bereich des Randes der Scheibe erfolgen.

Der akustische Leistungswandler ist vorzugsweise ein piezoelektrisches Element, das beispielsweise scheibenförmig gestaltet sein kann.

Es ist möglich, nur einen, zwei oder eine Vielzahl von akustischen Leistungswandlern im Reaktionsraum anzuordnen. Jeder der akustischen Leistungswandler hat vorzugsweise direkten Kontakt zur Ablauge, so dass die Schallwellen direkt in die Ablauge abgestrahlt werden. Direkter Kontakt heißt in diesem Zusammenhang, dass keine leitenden Festkörper vom Leistungswandler die Schwingungen in die Ablauge einleiten, wie dies z.B. eine Sonotrode macht. Vielmehr steht die Ablauge bei dieser Ausführungsform direkt am Leistungswandler, also der Ultraschallquelle selbst, an.

In einer vorteilhaften Ausführungsform der Erfindung wird der akustische Leistungswandler gepulst betrieben. Diese Pulsdauer ist dabei so gewählt, dass ein möglichst effektives Zerkleinern der Gasblasen und Lösen des ozonhaltigen Gasgemischs in der Ablauge erfolgt. Sind mehrere akustische Leistungswandler vorgesehen, können alle oder nur einige davon im Pulsbetrieb, mit gleichen oder unterschiedlichen Pulsdauern und Pulsfrequenzen betrieben werden.

Der Reaktionsraum wird beim Einleiten der Ablauge bevorzugt vollständig mit Ablauge gefüllt, so dass sich die Schallwellen im gesamten Reaktionsraum ausbreiten und von allen Richtungen in die Ablauge zurückreflektiert werden können. Die eingeleitete Gasmenge und die Gasflussrate sind bevorzugt so gewählt, dass kein Gasvolumen über der Ablauge entsteht.

In einer vorteilhaften Ausführungsform des erfindungsgemäßen Verfahrens strömt die Ablauge während der Behandlung mit Ultraschall und der Kavitationsbehandlung durch den Reaktionsraum hindurch. Das Verfahren wird also nicht auf ein stehendes Ablaugevolumen, sondern im Durchflussprinzip auf die durch den Reaktionsraum strömende Ablauge angewandt.

Im Sinne der vorliegenden Beschreibung umfasst der Begriff "Reaktionsraum" im Wesentlichen das zusammenhängende Volumen um das Kavitationselement bis hin zu dem Volumen um den oder die akustischen Leistungswandler. Diese Volumina können in unmittelbarer Nachbarschaft zueinander liegen oder voneinander beabstandet sein, wobei der Abstand zwischen den Volumina durch das Ausgasen des mit Hilfe des Kavitationselements in die Ablauge eingebrachten Gasgemischs mitbestimmt ist.

Der Reaktionsraum kann von einer einzigen Kammer gebildet sein, in der sowohl das Kavitationselement als auch der oder die akustische(n) Leistungswandler angeordnet sind, oder auch von mehreren Kammern, die aber durch Rohrleitungen zusammenhängend miteinander verbunden sind, wobei das Kavitationselement und der akustische Leistungswandler jeweils in einer eigenen Kammer angeordnet sind. Wichtig ist in diesem Fall jedoch, dass der Ultraschall bis zum Kavitationselement wirkt.

Es ist vorteilhaft, wenn der gesamte Reaktionsraum, der das Kavitationselement und den oder die akustischen Leistungswandler umfasst, möglichst gleichmäßig von den Schallwellen des/der akustischen Leistungswandler(s) durchzogen wird.

Die Erfindung betrifft außerdem eine Vorrichtung zur Durchführung des erfindungsgemäßen Verfahrens, mit einem Vorratsbehälter für Sulfide enthaltende Ablauge, einem mit dem Vorratsbehälter strömungsmäßig verbundenen Reaktionsraum, wobei der Reaktionsraum wenigstens einen akustischen Leistungswandler und ein mechanisches Kavitationselement umfasst, und wobei eine Zuführeinrichtung für ozonhaltiges Gas in den Reaktionsraum vorgesehen ist, dadurch gekennzeichnet, dass die Vorrichtung weiter einen oder mehrere Temperatursensoren und eine mit dem oder den Temperatursensoren und der Zuführeinrichtung verbundene Steuerungseinheit, welche im Betriebsfall die in den Reaktionsraum zugeführten Menge an ozonhaltigem Gas in Abhängigkeit von der Temperatur der Ablauge regelt, aufweist.

Das erfindungsgemäße Verfahren und die erfindungsgemäße Vorrichtung eignen sich insbesondere zur Behandlung von sulfidhaltigen Ablaugen aus petrochemischen Raffinerien und Anlagen der Zellstoff- und Papierherstellung. Das Verfahren ist jedoch nicht auf diese Anwendungen beschränkt. Insbesondere ist denkbar, das Verfahren auch zur Aufbereitung von Abwässern aus Biogasanlagen einzusetzen.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1 ein schematisches Flussdiagramm des erfindungsgemäßen Verfahrens; und
- Figuren 2a und 2b schematische Schnittansichten des Reaktionsraums einer Vorrichtung zur Durchführung des erfindungsgemäßen Verfahrens.

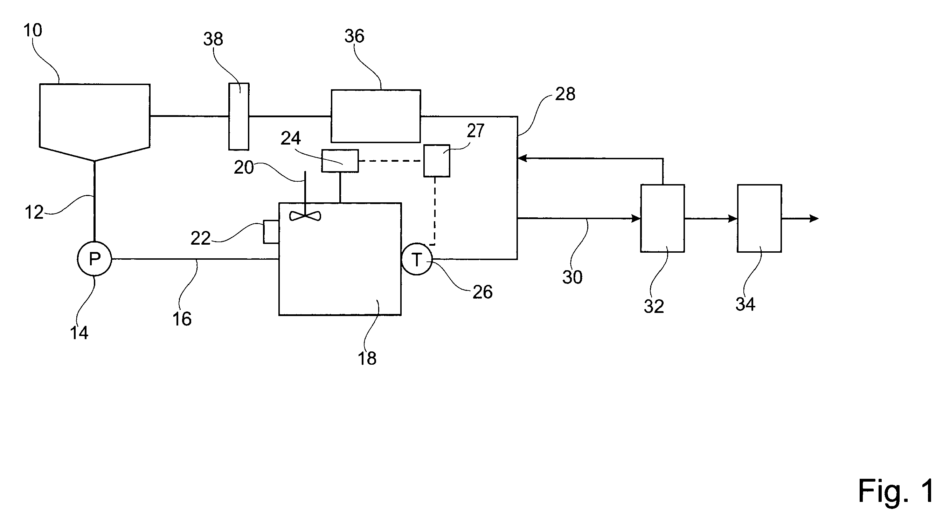

In Figur 1 ist ein Flussdiagramm für das erfindungsgemäße Verfahren zur Behandlung einer Sulfide enthaltenden Ablauge gezeigt. Aus einem Vorratstank 10 fließt rohe sulfidhaltige Ablauge durch eine Leitung 12 zu einer Pumpe 14, mit der die Ablauge in die Behandlungsvorrichtung geführt wird. Die Rohlauge wird von der Pumpe durch eine Leitung 16 in den Reaktionsraum 18 gefördert.

In dem Reaktionsraum 18 ist ein mechanisches Kavitationselement 20 vorgesehen. Des Weiteren umfasst der Reaktionsraum 18 wenigstens einen akustischen Leistungswandler 22, insbesondere einen Ultraschallgeber. An den Reaktionsraum 18 ist ferner ein Ozongenerator 24 angeschlossen, aus dem ein ozonhaltiges Gasgemisch in den Reaktionsraum zugeführt wird. Die Zuführung des ozonhaltigen Gasgemischs aus dem Ozongenerator 24 in den Reaktionsraum 18 kann vorzugsweise über das mechanische Kavitationselement 20 erfolgen. Am oder im Reaktionsraum 18 und/oder in den Zu- oder Ableitungen kann ferner ein Temperatursensor 26 angeordnet sein.

Die sulfidhaltige Ablauge wird dem Reaktionsraum 18 unter Umgebungsbedingungen, das heißt unter Umgebungstemperatur und Umgebungsdruck, zugeführt. Im Reaktionsraum 18 wird die Ablauge dann durch Einleiten von Ultraschall aus dem akustischen Leitungswandler 22 bei einer Frequenz im Bereich von 400 bis 1400 kHz behandelt, während die Ablauge den Reaktionsraum durchströmt.

Im Anschluss an oder gleichzeitig mit der Ultraschallbehandlung wird aus dem Ozongenerator 24 ein ozonhaltiges Gasgemisch in den Reaktionsraum 18 eingeleitet und mit dem mechanischen Kavitationselement 20 feindispers in der Ablauge verteilt. Bevorzugt wird das ozonhaltige Gasgemisch dabei direkt über die rotierende Kavitationsscheibe des Kavitationselements 20 zugeführt.

Die vom Ozongenerator erzeugte Ozonmenge beträgt bevorzugt mindestens etwa 80 g/h. Geringere Ozonmengen verlängern die für die vollständige Umsetzung der Sulfide benötigte Zeit. Die genaue Ozonmenge kann unter Berücksichtigung der zu behandelnden Ablaugenmenge und der maximalen Löslichkeit des Ozons in der Ablauge festgelegt werden.

Die Oxidation der in der Ablauge enthaltenen Sulfide durch Ozon sowie gegebenenfalls Sauerstoff, OH-Radikale und Peroxoverbindungen, die durch den Ozoneintrag und/oder die Ultraschallbehandlung in der Ablauge entstehen, setzt nahezu sofort ein und führt zu einem Temperaturanstieg der Ablauge, der mit dem Temperatursensor 26 festgestellt werden kann.

Der mit dem Temperatursensor 26 festgestellte Temperaturanstieg kann in einer Steuerungseinheit 27 ausgewertet und zur Steuerung der mit dem Ozongenerator erzeugten und zur Ablauge zugeführten Ozonmenge verwendet werden. Vorzugsweise wird nur soviel Ozon erzeugt und der Ablauge zugeführt, dass die gesamte Ozonmenge verbraucht und mit den Sulfiden und anderen oxidierbaren Verbindungen in der Ablauge umgesetzt wird.

Die mit Ozon behandelte Ablauge wird über eine Leitung 28 aus der Reaktionskammer geführt und zurück in den Vorratstank 10 geleitet. An der Leitung 28 ist eine Ableitung 30 vorgesehen, mit der überschüssiges Gas aus der Behandlungsvorrichtung ausgetragen werden kann. Durch das Gas mitgerissene Ablauge oder Feststoffe können in einer Kühlvorrichtung 32 kondensiert und in die Leitung 28 zurückgeführt werden.

Gemäß einer bevorzugten Ausführungsform ist die Ableitung 30 für überschüssiges Gas am oder nahe am Reaktionsraum 18 vorgesehen. Damit kann das Entstehen von Überdruck in Teilen der Leitung 28 verhindert werden.

Das in der Kühlvorrichtung 32 getrocknete Gas kann weiter über einen oder mehrere Katalysatoren 34 zur Befreiung des Gases von Restozon und/oder schwefelhaltigen Verbindungen geleitet werden, bevor es in die Atmosphäre freigesetzt wird.

Des Weiteren kann in der Leitung 28 eine Kühlvorrichtung 36, beispielsweise ein Wärmetauscher, vorgesehen sein, um die Temperatur der Ablauge innerhalb vorbestimmter Grenzwerte zu halten. Des Weiteren kann die behandelte Ablauge in einer Trennvorrichtung 38 von Feststoffen befreit werden, die während der Umsetzung der sulfidhaltigen Ablauge gebildet werden können. Die Trennvorrichtung kann ein Spaltfilter, Dekanter oder ein anderer Filter sein.

Die Ablauge aus dem Vorratstank 10 wird so lange in einem Kreisprozess geführt, bis der Sulfidgehalt auf einen festgelegten Wert, beispielsweise 50 ppm oder niedriger, gefallen ist. Es hat sich außerdem herausgestellt, dass die Rückführung der behandelten Ablauge in den Kreisprozess die Behandlungsdauer insgesamt verkürzt.

Alternativ oder zusätzlich kann auch der chemische Sauerstoffbedarf der Ablauge bestimmt werden, zu dem sowohl die Sulfide als auch andere organische Substanzen beitragen, die ebenfalls durch Ozon oxidiert werden.

Sobald die Zielwerte für die Sulfide und/oder den chemischen Sauerstoffbedarf erreicht sind, wird der Vorratstank 10 entleert und steht für die Aufnahme neuer Rohlauge zur Verfügung. Die behandelte Ablauge kann entweder verdünnt, neutralisiert und/oder einer Kläranlage zugeführt werden.

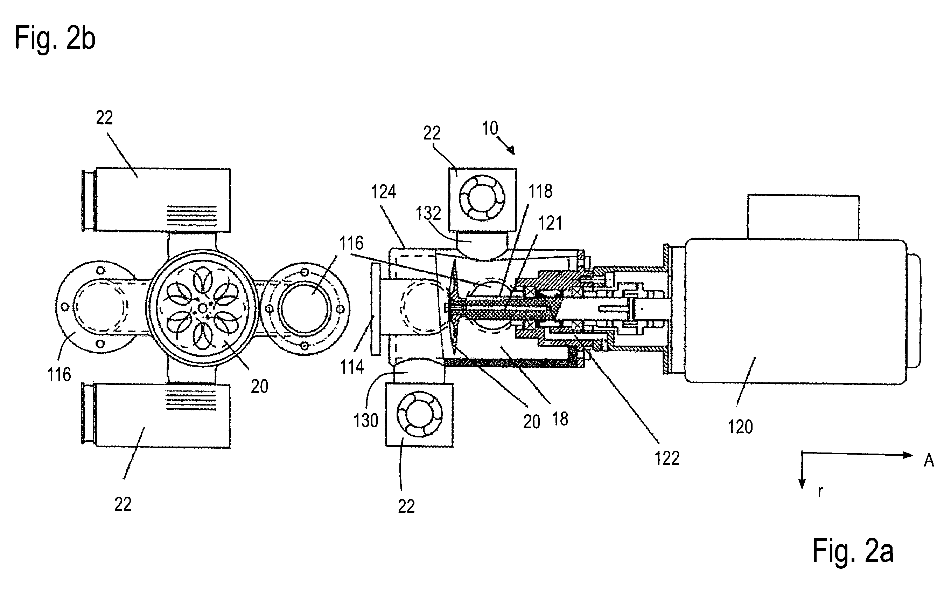

Der in den Figuren 2a und 2b schematische dargestellte Reaktionsraum 18 zur Aufnahme und chemischen Umsetzung der Ablauge weist einen Zulauf 114 und einen Ablauf 116 auf. Der Reaktionsraum 18 ist in diesem Beispiel als eine einzige Kammer ausgebildet.

Das Verfahren wird im Durchflussprinzip betrieben, d.h., die Ablauge strömt mit gleichmäßiger Strömungsgeschwindigkeit durch den Zulauf 114 in den Reaktionsraum 18 ein und aus dem Ablauf 116 aus dem Reaktionsraum 18 heraus. Zulauf 114 und Ablauf 116 sind an gegenüberliegenden Seiten des Reaktionsraums 18 in axialer Richtung A versetzt zueinander angeordnet. Im Betrieb ist die Vorrichtung so ausgerichtet, dass der Zulauf 114 am unteren Ende des Reaktionsraums 18 liegt.

Im Betrieb der Vorrichtung ist der gesamte Reaktionsraum 18 vollständig mit Ablauge gefüllt.

In der Nähe des Zulaufs 114 befindet sich ein mechanisches Kavitationselement 20, hier in Form einer als Strömungskörper geformten, horizontal und drehbar gelagerten diskusförmigen Scheibe mit entgegengesetzten konvexen Seiten, die an einem scharfen Umfangsrand aufeinandertreffen. Das Kavitationselement 20 ist über eine Hohlwelle 118 mit einem stufenlos regelbaren Motor 120 verbunden, der die Drehgeschwindigkeit des Kavitationselements 20 bestimmt. Das Kavitationselement 20 ist vollständig in die Ablauge eingetaucht und wird so schnell bewegt, dass in der Ablauge Kavitation auftritt.

Im Inneren der Hohlwelle 118 ist eine Gaszuführleitung 121 ausgebildet, die Teil einer Gaszuführeinrichtung ist, durch die ein ozonhaltiges Gasgemisch aus dem Ozongenerator (hier nicht gezeigt) zum Einbringen in die Ablauge an die Oberfläche des Kavitationselements 20 geführt wird. Hierzu ist die Gaszuführleitung 121 mit einem Kanal 122 verbunden, der außerhalb des Reaktionsraums 18 mündet und der an den Ozongenerator (nicht gezeigt) angeschlossen werden kann.

Die Gaszuführleitung 121 mündet bei der hier gezeigten Ausführungsform unmittelbar an der Oberfläche des Kavitationselements 20. Das ozonhaltige Gasgemisch tritt somit direkt an der Oberfläche des Kavitationselements 20 aus und wird im Bereich der höchsten Kavitationswirkung in die Ablauge eingebracht.

Die Gaszuleitung in unmittelbarer Nähe der Oberfläche des Kavitationselements 20 kann jedoch auch an anderer Stelle, nicht nur durch das Kavitationselement 20 hindurch erfolgen.

Der Reaktionsraum 18 ist von einer Wandung 124 umschlossen, die die Ablauge im Reaktionsraum 18 hält. Zum Reaktionsraum 18 zählen dabei neben der Kammer, in der das Kavitationselement 20 angeordnet ist, auch die anschließenden Rohrleitungen.

Des Weiteren umfasst der Reaktionsraum 18 zwei kurze, um 90° abgewinkelte Verbindungsstutzen 130, 132, an die jeweils ein akustischer Leistungswandler 22 angeschlossen ist und die die akustischen Leistungswandler 22 mit der Kammer verbinden, die das Kavitationselement 20 enthält. Beide akustischen Leistungswandler 22 sind vorzugsweise als Ultraschallgeber ausgebildet und arbeiten in einem Frequenzbereich von 400 bis 1500 kHz, bevorzugt in einem Frequenzbereich von 600 bis 1200 kHz. Der Stutzen 130 mündet auf der Höhe des Zulaufs 114, in Umfangsrichtung der Kammer um 90° versetzt von diesem, während der Stutzen 132 auf Höhe des Ablaufs 116 mündet, ebenfalls um 90° versetzt von diesem.

Die akustischen Leistungswandler 22 koppeln Ultraschallenergie als Elementarwelle direkt in die Ablauge und auch in das Kavitationselement 20 ein, und zwar auf beiden Seiten jedes scheibenförmigen Leistungswandlers 22.

Zur Beladung der Ablauge mit dem ozonhaltigen Gasgemisch wird das Kavitationselement 20 in so schnelle Rotation versetzt, dass es in der Ablauge zur Kavitation kommt. Durch die Gaszuführeinrichtung wird das ozonhaltige Gas an die Oberfläche des Kavitationselements 20 geleitet. Aufgrund der Kavitationswirkung wird das eingeleitete Gas im Wesentlichen vollständig in die Ablauge eingebracht.

Da der gesamte Raum von den Schallwellen der akustischen Leistungswandler 22 erfüllt ist, werden die durch das Kavitationselement 20 erzeugten Blasen sofort durch die Schallenergie zerkleinert, wobei eine mittlere Blasengröße im Nanometerbereich entsteht und ein großer Anteil von Blasen im Angströmbereich erzeugt wird. Dies führt dazu, dass ein großer Anteil des in die Ablauge eingeleiteten ozonhaltigen Gasgemischs molekular-dispers in der Ablauge gelöst wird. Daher verbleibt das gesamte eingebrachte Gas über einen relativ langen Zeitraum in der Ablauge.

Bei der gezeigten Anordnung kann der strömungsmäßig gesehen erste akustische Leistungswandler 22 auch zur sono-chemischen Vorbehandlung der Ablauge eingesetzt werden, bevor diese mit dem ozonhaltigen Gasgemisch beladen wird. Die einströmende Ablauge wird direkt den Schallwellen des akustischen Leistungswandlers 22 ausgesetzt, was dazu führt, dass die anschließende Oxidationsreaktion schneller abläuft.

### Ausführungsbeispiel

8 Liter einer mit Sulfid beladenen alkalischen Wäsche aus einer Raffinerie wurden mit 500 l Reinwasser verdünnt und in einem Vorratstank gelagert. Die so erhaltene sulfidhaltige Ablauge hatte einen pH-Wert von 11,93, einen chemischen Sauerstoffbedarf (COD) von 2364 mg/l und einen Sulfidgehalt von 450 mg/l.

An den Vorratstank wurde über eine Pumpe eine erfindungsgemäße Vorrichtung in Form einer Pilotanlage mit einem Reaktionsraum 18 angeschlossen, in dem ein mechanisches Kavitationselement 20 sowie zwei als Ultraschallgeber ausgebildete akustische Leistungswandler 22 stromaufwärts und stromabwärts des Kavitationselements vorhanden waren. An den Reaktionsraum war außerdem ein handelsüblicher Ozongenerator 24 (Hersteller Ozonia AG, Schweiz) angeschlossen.

Mit Hilfe des Ozongenerators wurde etwa 200 g/h Ozon im Gemisch mit Sauerstoff in die Ablauge eingetragen und im Durchflussbetrieb behandelt. Das Kavitationselement wurde mit etwa 3000 Umdrehungen/min betrieben. Die Ultraschallgeber lieferten eine Frequenz von etwa 600 kHz bei einer Leistung von etwa 1400 Watt.

Das überschüssige bzw. umgesetzte Gas (im Wesentlichen Luft bzw. Sauerstoff) wurde durch Ableitungen aus der Vorrichtung ausgetragen, wobei aus dem Gas auskondensierte flüssige Anteile in die Vorrichtung zurückgeführt wurden.

Die behandelte Ablauge wurde anschließend in den Vorratstank zurückgeführt. Der Prozess wurde solange im Kreis geführt, bis der Sulfidanteil der Ablauge stabil unter 10 ppm lag. In vorher festgelegten Zeitintervallen wurden Proben aus dem Vorratstank gezogen und hinsichtlich der Sulfidkonzentration und des COD analysiert. Dabei ergaben sich die in der folgenden Tabelle dargestellten Messwerte.

**Tabelle: Behandlung von 8 Liter Ablauge in 500 l Reinwasser:**

| **Zeit min** | **Probe** | **pH** | **T °C** | **COD mg/l** | **Sulfid mg/l** |
|---|---|---|---|---|---|
| 0 | Roh | 11,93 | 22,2 | 2364 | 450 |
| 15 | 1 | 11,91 | 23,6 | 2454 | 460 |
| 30 | 2 | 11,9 | 24,6 | | 300 |
| 45 | 3 | 11,78 | 26,2 | | 190 |
| 60 | 4 | 11,4 | 28,2 | 2043 | 160 |
| 75 | 5 | 11,42 | 25,2 | | 110 |
| 90 | 6 | 11,5 | 27,2 | | 19 |
| 105 | 7 | 11,42 | 25,8 | 1725 | 6 |
| 120 | 8 | 11,2 | 30,2 | | 5 |
| | 9 | 11,42 | 28,2 | | 11 |
| | 10 | 11,21 | 28,2 | | 10 |
| | 11 | 11,21 | 30,6 | 1515 | 7 |

Die Behandlung der sulfidhaltigen Ablauge unter Verwendung des erfindungsgemäßen Verfahrens führte schon nach etwa 2 Stunden zu einer Reduktion des Sulfidanteils unterhalb des Grenzwerte, die eine Einleitung in kommunale oder industrielle Kläranlagen erlauben. Das Verfahren kann mit technisch verfügbaren Mitteln unter Umgebungsbedingungen, nahe Umgebungstemperatur und unter Normaldruck durchgeführt werden. Da eine beliebige Anzahl von Reaktionsräumen hintereinander geschaltet werden kann, ist das Verfahren flexibel einsetzbar und kann leicht an Kundenvorgaben und/oder die Menge der in der Zeiteinheit zu behandelnden Ablauge angepasst werden.

## Patentansprüche

1. Verfahren zur Behandlung einer Sulfide enthaltenden Ablauge durch chemische Umsetzung der Sulfide, wobei das Verfahren folgende Schritte umfasst:
Einleiten der Ablauge in einen Reaktionsraum (18), der wenigstens einen akustischen Leistungswandler (22) und ein Kavitationselement (20) umfasst;
Behandlung der Ablauge mit Ultraschall aus dem wenigstens einen akustischen Leistungswandler (22),
Zuführen eines ozonhaltigen Gasgemischs in den Reaktionsraum und Verteilen des ozonhaltigen Gasgemischs in der Ablauge unter Verwendung des Kavitationselements (20);
wobei die sulfidhaltige Ablauge mit dem ozonhaltigen Gasgemisch unter Bildung von nicht-sulfidischen anorganischen Schwefelverbindungen umgesetzt wird,
**dadurch gekennzeichnet, dass** die Temperatur der Sulfide enthaltenden Ablauge gemessen und zur Steuerung der zur Ablauge zuzuführenden Ozonmenge ausgewertet wird.

2. Verfahren nach Anspruch 1, **dadurch gekennzeichnet, dass** eine Ablauge mit einem pH-Wert von zwischen 8 und 14, bevorzugt von 9 bis 12, eingesetzt wird.

3. Verfahren nach Anspruch 1 oder 2, **dadurch gekennzeichnet, dass** die Ultraschallbehandlung mit 400 bis 1500 kHz durchgeführt wird.

4. Verfahren nach einem der Ansprüche 1 bis 3, **dadurch gekennzeichnet, dass** die Sulfide enthaltende Ablauge vor dem Zuführen des ozonhaltigen Gasgemischs mit Ultraschall behandelt wird.

5. Verfahren nach einem de Ansprüche 1 bis 4, **dadurch gekennzeichnet, dass** das ozonhaltige Gasgemisch ein Sauerstoff/Ozon-Gemisch ist.

6. Verfahren nach einem der Ansprüche 1 bis 5, **dadurch gekennzeichnet, dass** die Umsetzung der Sulfide mit Ozon bei 20 bis 40 °C erfolgt.

7. Verfahren nach einem der Ansprüche 1 bis 6, **dadurch gekennzeichnet, dass** das Verfahren in mehreren hintereinander angeordneten Reaktionsräumen durchgeführt wird.

8. Verfahren nach einem der Ansprüche 1 bis 7, **dadurch gekennzeichnet, dass** die Ultraschallbehandlung und die Umsetzung mit Ozon unter Umgebungsdruck durchgeführt werden.

9. Verfahren nach einem der Ansprüche 1 bis 8, **dadurch gekennzeichnet, dass** das Gasgemisch nach dem Schritt der Umsetzung mit den Sulfiden aus der Ablauge ausgetragen und über einen oder mehrere Katalysatoren zur Zersetzung von nicht umgesetztem Ozon und/oder weiteren Oxidation von schwefelhaltigen Verbindungen, insbesondere Schwefelwasserstoff, geleitet wird.

10. Verfahren nach einem der vorhergehenden Ansprüche, **dadurch gekennzeichnet, dass** die Ablauge eine Natronlauge ist.

11. Verfahren nach einem der vorhergehenden Ansprüche, **dadurch gekennzeichnet, dass** die nicht-sulfidischen anorganischen Schwefelverbindungen im Wesentlichen Sulfate sind.

12. Vorrichtung zur Durchführung des erfindungsgemäßen Verfahrens, mit einem Vorratsbehälter (10) für Sulfide enthaltende Ablauge, einem mit dem Vorratsbehälter strömungsmäßig verbundenen Reaktionsraum (18), wobei der Reaktionsraum wenigstens einen akustischen Leistungswandler (22) und ein mechanisches Kavitationselement (20) umfasst, und wobei eine Zuführeinrichtung (24) für ozonhaltiges Gas in den Reaktionsraum vorgesehen ist, **dadurch gekennzeichnet, dass** die Vorrichtung weiter einen oder mehrere Temperatursensoren (26) und eine mit dem oder den Temperatursensoren (26) und der Zuführeinrichtung (24) verbundene Steuerungseinheit (27) aufweist, welche im Betriebsfall die in den Reaktionsraum zugeführte Menge an ozonhaltigem Gas in Abhängigkeit von der Temperatur der Ablauge regelt.

## Claims

1. Method for treatment of a sulphide-containing spent caustic via chemical conversion of the sulphides, wherein the method is comprised of the following steps:
Introducing the spent caustic into a reaction chamber (18) that is comprised of at least one acoustic power converter (22) and one cavitation element (20),
treating the spent caustic with ultrasound from the at least one acoustic power converter (22),
feeding a gas mixture containing ozone into the reaction chamber and distributing the gas mixture containing ozone in the spent caustic using the cavitation element (20),
wherein the sulphide-containing spent caustic is converted with the gas mixture containing ozone, forming non-sulphide-bearing, inorganic sulphur compounds, **characterized in that** the temperature of the sulphide-containing spent caustic is measured and evaluated to control the quantity of ozone to be supplied to the spent caustic.

2. Method according to claim 1, **characterised in that** a spent caustic with a pH value of between 8 and 14, preferably from 9 to 12, is used.

3. Method according to claim 1 or 2, **characterised in that** the ultrasonic treatment is carried out with 400 to 1500 kHz.

4. Method according to claims 1 to 3, **characterised in that** the sulphide-containing spent caustic is treated with ultrasound before the addition of the gas mixture containing ozone.

5. Method according to one of the claims 1 to 4, **characterised in that** the gas mixture containing ozone is an oxygen/ozone mixture.

6. Method according to one of the claims 1 to 5, **characterised in that** the sulphides are converted with ozone at 20 to 40° C.

7. Method according to one of the claims 1 to 6, **characterised in that** the method is carried out in several reaction chambers arranged one behind the other.

8. Method according to one of the claims 1 to 7, **characterised in that** the ultrasonic treatment and the conversion with ozone are carried out at the ambient pressure.

9. Method according to one of the claims 1 to 8, **characterised in that** the gas mixture is discharged from the spent caustic with the sulphides after the conversion step and passed through one or more catalytic converters to break down unconverted ozone and/or to further oxidize compounds containing sulphur, especially hydrogen sulphide.

10. Method according to one of the preceding claims, **characterised in that** the spent caustic is caustic soda.

11. Method according to one of the preceding claims, **characterised in that** the non-sulphide-bearing, inorganic sulphur compounds are essentially sulphates.

12. Device for carrying out the method as per the invention with a feeder tank (10) for sulphide-containing spent caustic and a reaction chamber (18) connected in terms of flow with the feeder tank, wherein the reaction chamber includes at least one acoustic power converter (22) and a mechanical cavitation element (20) and wherein a supply unit (24) for gas containing ozone is provided in the reaction chamber, **characterised in that** the device further includes one or more temperature sensors (26) and a control unit (27) connected to the temperature sensor(s) (26) and the supply unit (24) for controlling the quantity of gas containing ozone that is supplied to the reaction chamber in dependence upon the temperature of the spent caustic.

## Revendications

1. Procédé pour traiter une liqueur résiduaire contenant des sulfures par conversion chimique des sulfures, le procédé comprenant les étapes suivantes :
introduction de la liqueur résiduaire dans un espace de réaction (18) qui comprend au moins un convertisseur de puissance acoustique (22) et un élément de cavitation (20) ;
traitement de la liqueur résiduaire avec des ultrasons provenant du convertisseur de puissance acoustique qui existe au moins (22) ;
amenée d'un mélange gazeux contenant de l'ozone dans l'espace de réaction et répartition du mélange gazeux contenant de l'ozone dans la liqueur résiduaire en utilisant l'élément de cavitation (20),
cependant que la liqueur résiduaire contenant des sulfures est convertie avec le mélange gazeux contenant de l'ozone en formant des composés soufrés anorganiques non sulfurés,
**caractérisé en ce que** la température de la liqueur résiduaire contenant des sulfures est mesurée et analysée pour commander la quantité d'ozone à amener à la liqueur résiduaire.

2. Procédé selon la revendication 1, **caractérisé en ce que** l'on utilise une liqueur résiduaire avec une valeur de pH entre 8 et 14, de préférence de 9 à 12.

3. Procédé selon la revendication 1 ou 2, **caractérisé en ce que** le traitement avec des ultrasons est exécuté avec 400 à 1500 kHz.

4. Procédé selon l'une des revendications 1 à 3, **caractérisé en ce que** la liqueur résiduaire contenant des sulfures est traitée avec des ultrasons avant l'amenée du mélange gazeux contenant de l'ozone.

5. Procédé selon l'une des revendications 1 à 4, **caractérisé en ce que** le mélange gazeux contenant de l'ozone est un mélange d'oxygène et d'ozone.

6. Procédé selon l'une des revendications 1 à 5, **caractérisé en ce que** la conversion des sulfures avec de l'ozone se fait de 20 à 40 °C.

7. Procédé selon l'une des revendications 1 à 6, **caractérisé en ce que** le procédé est exécuté dans plusieurs espaces de réaction placés l'un derrière l'autre.

8. Procédé selon l'une des revendications 1 à 7, **caractérisé en ce que** le traitement avec des ultrasons et la conversion avec de l'ozone sont exécutés à la pression ambiante.

9. Procédé selon l'une des revendications 1 à 8, **caractérisé en ce que** le mélange gazeux est évacué de la liqueur résiduaire après l'étape de conversion avec les sulfures et est envoyé à un ou plusieurs catalyseurs pour décomposer l'ozone qui n'a pas été converti et/ou pour l'oxydation ultérieure de composés soufrés, en particulier d'hydrogène sulfuré.

10. Procédé selon l'une des revendications précédentes, **caractérisé en ce que** la liqueur résiduaire est une solution de soude caustique.

11. Procédé selon l'une des revendications précédentes, **caractérisé en ce que** les composés soufrés anorganiques non sulfurés sont essentiellement des sulfates.

12. Dispositif pour exécuter le procédé conforme à l'invention avec un réservoir (10) pour de la liqueur résiduaire contenant des sulfures, un espace de réaction (18) relié pour ce qui est de l'écoulement au réservoir, l'espace de réaction comprenant au moins un convertisseur de puissance acoustique (22) et un élément de cavitation mécanique (20) et un dispositif d'amenée (24) pour du gaz contenant de l'ozone dans l'espace de réaction étant prévu, **caractérisé en ce que** le dispositif présente de plus un ou plusieurs capteurs de température (26) et une unité de commande (27), reliée au ou aux capteurs de température (26) et au dispositif d'amenée (24), qui régule, en fonctionnement, la quantité de gaz contenant de l'ozone amenée dans l'espace de réaction en fonction de la température de la liqueur résiduaire.
